# EUROPEAN PATENT APPLICATION

(11) **EP 3 858 733 A1**
(43) Date of publication of application: **04.08.2021**
(21) Application number: 20155096.9
(22) Date of filing: 03.02.2020
(51) Int. Cl.: B64D 1/18

(54) **METHOD FOR SUPPRESSION OF VOLCANIC DUST IN A VOLCANIC DUST PLUME**

(71) Applicant: Damnjanovic, Budimir, 81250 Cetinje (ME); Damnjanovic, Desanka, 81250 Cetinje (ME)
(72) Inventor: Damnjanovic, Budimir, 81250 Cetinje (ME); Damnjanovic, Desanka, 81250 Cetinje (ME)
(74) Representative: Müller, Wolfram Hubertus

(57) **Abstract**

The invention provides for a method of suppression of volcanic dust in a volcanic dust plume and accompanied corrosive vapors, the method comprising: upon occurrence of a volcanic eruption, flying at least one tanker airplane into a flying position above the rising dust plume, and spraying by the at least one tanker airplane at least one of a first fluid and a second fluid into the dust plume, the first fluid comprising a scrubbing agent that removes or neutralizes at least one corrosive vapor included in the dust plume, and the second fluid comprising a water soluble polymer flocculant. The invention further comprises a tanker airplane suitable for carrying out such method.

## Description

### CROSS-REFERENCE TO RELATED APPLICATIONS: Appendix A

### BACKGROUND

### 1. Field of Invention

The present disclosure relates to the method of suppression of volcanic dust in a volcanic dust plume and accompanied corrosive vapors shortly after initial, large scale volcanic eruption, in effort to minimize the said dust from reaching stratosphere where it is dispersed by winds around the globe in the form of ash clouds and adversely effect global climate.

### 2. Description of Prior Art

Very large volcanic eruptions can be extremely hazardous, not only for people living in the near vicinity to the volcano, but also for people in distant parts of the globe. The volcanic fine plume dust, which has risen to stratosphere in the aftermath of the eruption, is carried by winds and dispersed over a very wide area. This dust is capable of reducing sunlight reaching Earth, which in turn reduces photosynthesis and the average temperature over the land and bodies of water significantly, adversely impacting plant growth. With both the marine and land ecosystems adversely impacted, the planet's human population would also be affected to the extent that the resulting food shortages would lead to uncontrollable civil unrests and wars.

Further, currently large number of volcanoes are considered active, in the sense that they show some level of activity and are deemed likely to explode with undetermined amount of destructive force [**3**], [**4**]. Some volcanoes, such as those in Germany, are not on these lists. Laacher See volcano under a lake near Bonn, has historically erupted once every 10,000-12,000 years. The last eruption was 12,900 years. The Icelandic volcano Eyjafjallajokull which erupted in 2011 stopped air traffic over Europe for several days. This volcano is estimated to be 1/10 the size of Laacher See.
One of potentially the most destructive volcanoes on the planet is the Yellowstone caldera "super volcano" in the United States. The fear of this volcano erupting is increasing as geysers and earthquake swarms are becoming substantially more numerous, frequent in diverse places within such a compressed period of time. According to some reports [**5**], [**6**], [**7**] the eruption of the Yellowstone "super volcano" can pose a "mass extinction event". Even a relatively small volcanic eruption can generate sufficient amount of fine dust into the atmosphere to cause potential hazard to commercial air traffic. In addition to reducing sunlight reaching the Earth, volcanic plume dust contains large quantities of sulfur dioxide **(SO₂)** gases which convert to sulfuric acid **(H₂SO₄)** aerosols when coming in contact with moisture and fall back to Earth, to the detriment of living organisms.

Further, while there are some Prior Art proposals **[1], [2]** for example, to prevent violent super volcanic eruptions by evacuating the magma, our invention proposes an alternative method.

### SUMMARY

The invention provides for a method of suppression of volcanic dust in a volcanic dust plume and accompanied corrosive vapors with the features of claim 1 and a tanker airplane with the features of claim 9. Embodiments of the invention are identified in the dependent claims.

Modern industrial processes which generate copious amounts of dust and corrosive vapor are generally controlled or abated by several methods, one of which is a modified "wet scrubber" technology. It is this type of technology in a simple, modified form for the immediate emergency response, which is the basis of our invention.

Further, wet scrubber technology removes dust particles by capturing them in liquid droplets. If the polluted dust stream also contains corrosive gases such as sulfur dioxide **(SO₂)**, as in the case of volcanic dust, wet scrubber is generally the only method that can remove these types of pollutants. To obtain high efficiencies of both dust removal and neutralization of corrosive vapor, it is necessary that a scrubbing agent such as sodium hydroxide **(NaOH),** or sodium bicarbonate **(NaHCO₃),** or calcium carbonate **(CaCO₃)** that is more often referred to as lime, be used on corrosive sulfur dioxide gas vapor **(SO₂)** or the sulfuric acid **(H₂SO₄)**.

Further, in addition to the aforementioned scrubbing agents, the volcanic dust suppression mixture of our preferred embodiment would also consist of water soluble, inorganic or organic biodegradable polymer flocculent, based on acrylamide or polysaccharides and its derivatives which may include either anionic (-) or cationic (+) groups in a wide range of molecular weight and charge densities. They are available in dry powders or in liquid form. Most aggregate operations use neutral (non-ionic) or anionic flocculents. The anionic form of linear, water-soluble polyacrylamide is frequently used as a soil conditioner on farmland and construction sites for erosion control, in order to protect the water quality of nearby rivers and streams. The ionic form of polyacrylamide has found an important role in the potable water treatment industry. Trivalent metal salts, like ferric chloride and aluminium chloride, are bridged by the long polymer chains of polyacrylamide. This results in significant enhancement of the flocculation rate. This allows water treatment plants to greatly improve the removal of Total Organic Content (TOC) from raw water.

Flocculants help aggregate fine suspended dust particles to form large flocs so that the solids can more easily and quickly fall to the ground. It is important that the flocculent be used in the initial phase of dust suppression since the dust particles are more concentrated and voluminous and are easier to floc.

Our invention proposes that a sizeable number of giant aircraft water tankers which are currently used in suppression of forest fires, such as giant Russian water tanker Ilyushin-76TD ("Waterbomber") or similar, to be specially modified with appropriate liquid additives and liquid spraying equipment for the suppression of volcanic plume dust and to be stationed at strategic points near expectant volcanic eruption and water source. Immediately after the volcanic eruption, and shortly after the ejected tephra have fallen back to earth, the water tankers would ascend in a formation well above the rising plume cloud to commence with abatement action before the said dust plume rises to sufficiently high altitude, becoming difficult to abate and posing considerable hazard to the global climate and commercial air traffic. Until the volcanic dust cloud stops its ascent, the water tankers would continue rising in a spiral fashion and circling safely above the dust cloud to avoid becoming engulfed by it, while continuously control spraying directly downwards with the liquid abatement mixture. As each taker empties its dust suppression mixture, its place is immediately taken up by a fully loaded tanker.

Further, water tankers would contain powerful mixers to continuously stir the mixture of anionic polymer and lime in water solution in these separate tanks. The mixture would then be distributed at high pressure along several redundant pipes running along the full length of the underside of wings and fuselage and delivered to spraying nozzles with different flow rates ("coarse" or "fine"), which have been adjusted for optimum spraying effect. The course-spraying nozzles are preferred when used for polymer solution as they will cause less shear on the polymer than the finer-spraying nozzles, thus maintaining its effectiveness.

Determination the "coarse" or "fine" spraying nozzle depends on the particular brand of liquid polymer flocculant that is used, the application method, pump pressure, flow rates, nozzle types and nozzle fan pattern, so as to minimize polymer shearing and therefore reduce the effectiveness of the polymer flocculant. Further, by setting the application parameters for the polymer flocculant, it will be easier to set application parameters for the scrubbing agent such as sodium hydroxide (NaOH), or sodium bicarbonate (NaHCO3), or calcium carbonate (CaCO3).

Further, to be most effective, the water tankers and their operating crews, whether state or privately owned, could be under the United Nations auspices since this arrangement affords them the needed authority to rapidly deploy into or close to any country with a volcano ready to erupt or is erupting. The costs associated with maintaining and operating the said water tankers could be shared among the world's governments and insurance companies which have insured against loses resulting from natural disasters such as volcanic eruption and who have vested interest and stand to profit from reduced volcanic eruption damage.

### BRIEF DESCRIPTION OF THE DRAWINGS

The foregoing aspects and many of the attendant advantages of this invention will become better understood by reference to the following detailed description, when taken in conjunction with the accompanied drawings, wherein:
**Fig.1** is an elevation view of the giant aircraft water tankers in a flying formation above the rising volcanic dust plume, consistently and uniformly ascending in a spiral manner.
**Fig.2** is a plan view of the water tankers in an increasingly expanding lateral flying formation above the rising and lateral expanding volcanic plume.
**Fig.3** is a view of water tanker's underside which depicts generally the spraying nozzles and piping under the fuselage and wings.
**Fig.3A** is a typical plumbing detail from **Fig.3** of fuselage underside; wheels not depicted for simplicity.
**Fig.3B** is a typical plumbing detail from **Fig.3** of the left wing underside; engines not depicted for simplicity.
**Fig.3C** is a typical plumbing detail from **Fig.3** of the right wing underside; engines not depicted for simplicity.
**Fig.4** is an inside of the water tanker's fuselage cargo bay area, showing the arrangement of tanks with abatement mixtures.
**Fig.5** is a control table for the spraying nozzles.

### DETAILED DESCRIPTION OF THE DRAWINGS

The present invention will be understood more fully from the accompanying drawings of the preferred embodiments given herein. However, the drawings are not intended to imply limitation of the invention to specific embodiment, but are for explanation and understanding only.

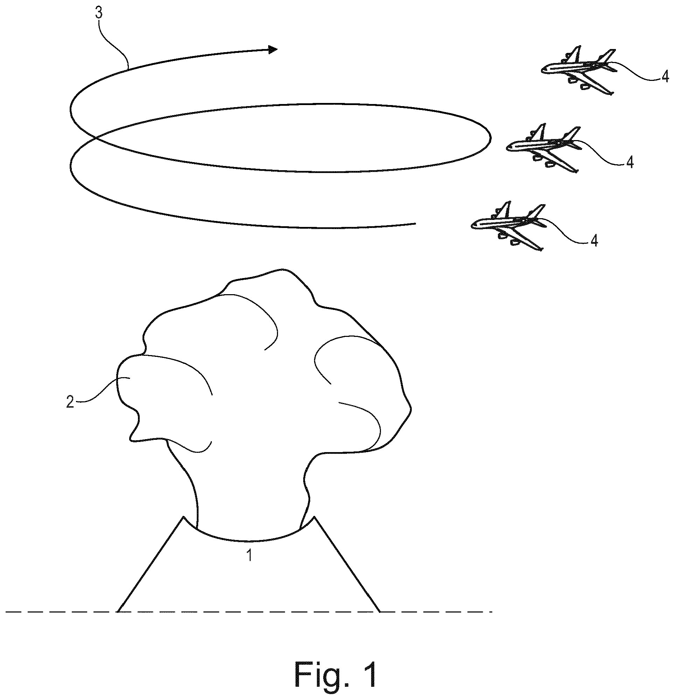

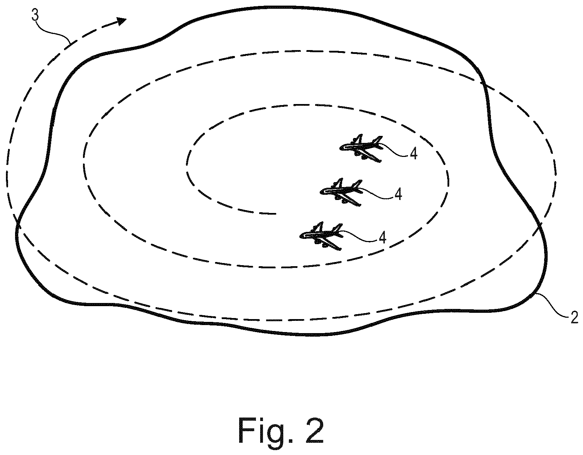

Referring to **Fig.1****,** upon eruption of volcano **1,** water tankers **4** would take up their clockwise or counter-clockwise flight pattern above the rising dust plume/cloud **2** for spraying abatement mixture on the rising and expanding dust plume. The water tankers **4** would all fly in a circular and staggered formation **(****Figs.1****,** **2****)** while maintaining similar altitude and in unison ascend circling in a spiral manner **3** in order to remain safely above the rising dust plume. As the dust plume rises, it will tend to spread out laterally. This will require the planes to also spread out while keeping the circular ascending pattern.

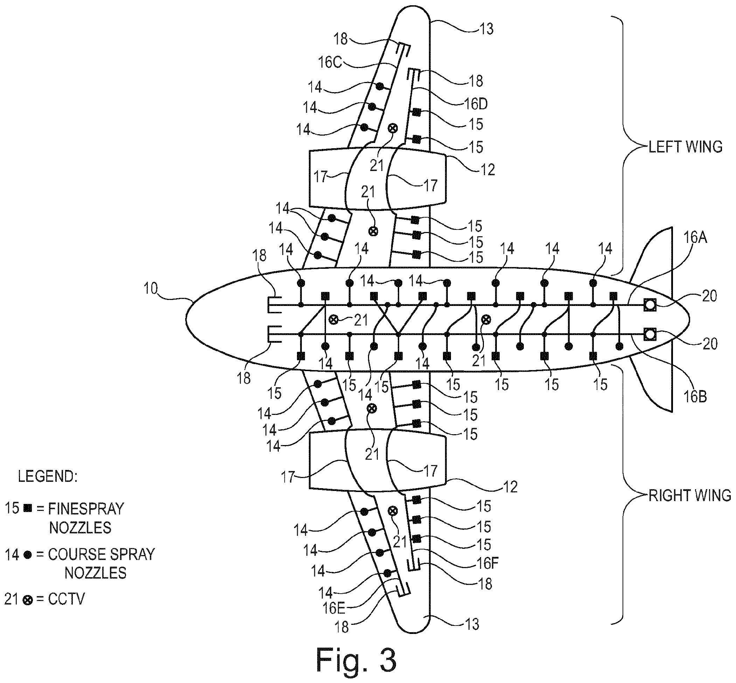

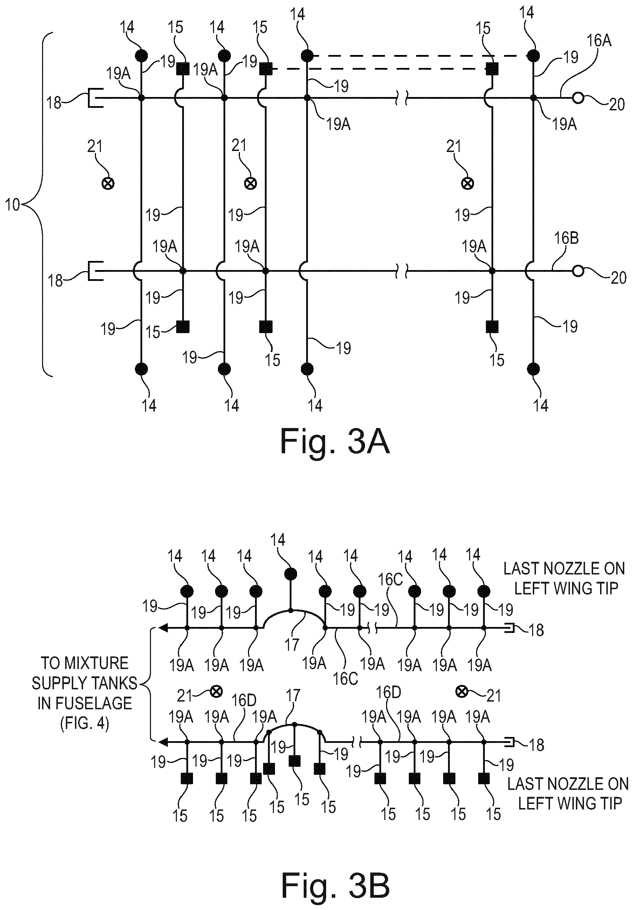

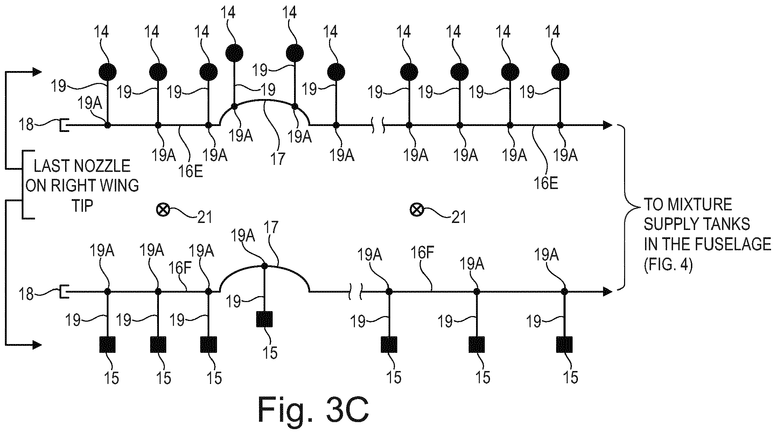

Further, the water tankers would be equipped with spraying nozzles of different spraying geometries/patterns, mounted on the underside of wings **13** and fuselage **10 (****Figs.3****,** **3A, 3B****).** Our preferred embodiment indicates spraying with two different types of nozzles for example, such as course-spraying nozzles **14** and fine-spraying nozzles **15.** The course-spraying nozzles **14** would be utilized in the initial and middle stages of dust suppression while the dust cloud is thick and rising rapidly, the objective being to retard the cloud ascension quickly as possible. In addition, the application of liquid polymer flocculant would be conducted through this course-spraying nozzle **14** only in order to minimize the shearing of the polymer. The fine-spraying nozzles **15** would be applied at all stages, especially in the terminal phase once the dust cloud has thinned out somewhat and slowed ascending. To observe the status or condition of the dust cloud below, the water tankers would be equipped with "looking downward" close circuit cameras (CCTV) **21** or similar, on the underside of fuselage and wings that are capable of daylight and night viewing.

Further, each type of spraying nozzle would be supplied from a dedicated flexible pipe. On the underside of fuselage **10 (****Figs.3****,** **3A****)** there are flexible supply pipes **16A, 16B** which run between landing wheels (not depicted) .They penetrate into the fuselage through openings or penetrations **20,** and are capped **18** at their opposite ends. For the fuselage, supply pipe **16A** supplies course-spraying nozzles **14,** while flexible pipes **16B** supplies fine-spraying nozzles **15.** Both types of supply pipes can be separately or jointly controlled. Also, both types of nozzles **14** and **15** are connected to the said supply pipes by-way-of shorter pipes **19** at connectors **19A.** Similarly:
(a) Under the left wing the nozzles **14** and **15** are connected to supply pipes **16C** and **16D** respectively at the connectors **19A (****Fig.3B****,** **3C****)** by-way-of shorted pipes **19;** and
(b) Under the right wing the nozzles **14** and **15** are connected to supply pipes **16E** and **16F** respectively at the connectors **19A (****Fig.3B****,** **3C****)** by-way-of shorted pipes **19.**

Further, on the underside of the left wing **(****Fig. 3B****)** nozzles **14** and **15** are connected to flexible supply pipes **16C** and **16D** respectively with a pipe curvature **17** over the engine **12** (not depicted). The nozzles are supplied through shorted flexible pipes **19** which are connected to **16C** and **16D** at connectors **19A.**

Further, on the underside of right wing **(****Fig. 3C****)** nozzles **14** and **15** are connected to flexible supply pipes **16E** and **16F** respectively with a curvature **17** over the engine **12** (not depicted). The nozzles are supplied through shorted flexible pipes **19** which are connected to **16E** and **16F** at connectors **19A.**

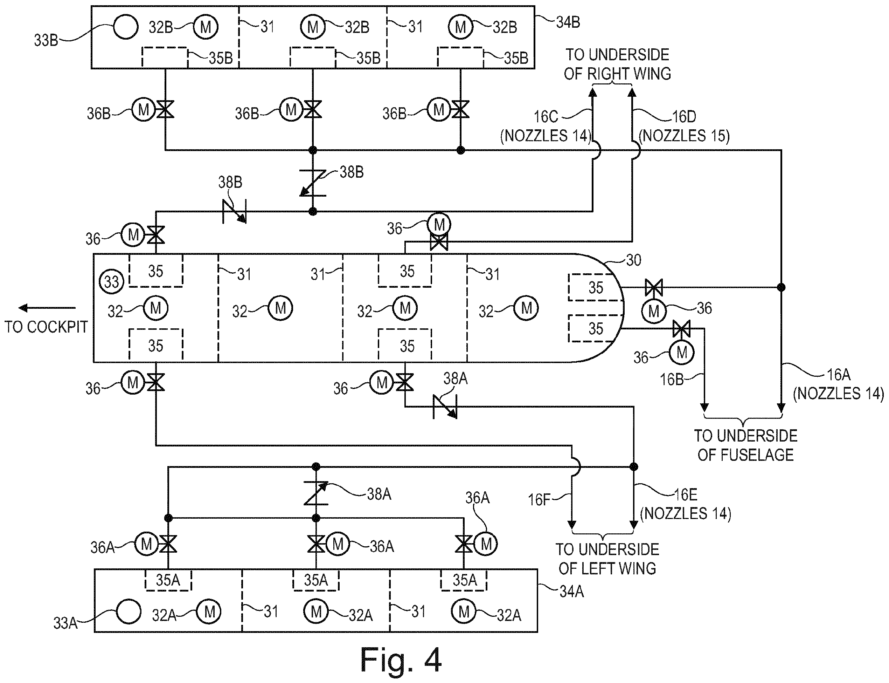

Flexible supply pipes **16A, 16B, 16C, 16D, 16E** and **16F** are connected to a main water tank **30 (****Fig.4****)** in the airplane's cargo bay area containing dust suppression additives and the main liquid polymer flocculent tanks **34A, 34B.**

Further, in **Fig.4****,** the main water tank **30** containing mixture of water and calcium carbonate/lime **(CaCO₃)** or sodium hydroxide (**NaOH**) or sodium bicarbonate **(NaHOCs)** for example, is separated internally by several baffles **31** with holes on the bottom (not depicted) to allow liquid levels in the tank to equalize. The top-mounted mixers **32** and a top-mounted electronic liquid level indicator **33** are used to monitor the volume of liquid in the tank.

Further, the two tanks **34A, 34B** with mixers **32A, 32B** respectively, contain synthetic water soluble, biodegradable polymer flocculent in a liquid form. Both tanks have internal baffles **31** to allow liquid levels to equalize. The top-mounted mixers **32A, 32B** and top-mounted electronic liquid level indicators **33A, 33B** are used to monitor the volume of the liquid polymer in the tanks.

Liquid synthetic polymer is transported/sprayed only through the course-spraying nozzles **14** (pipes **16A, 16C, 16E**) by-way-of submersible pumps **35A, 35B,** motorized valves **36A, 36B** and check valves **38A, 38B.** It is not recommended to spray the synthetic polymer flocculent through the fine-spraying nozzles **15** as it would shear the polymer and reduce its effectiveness.

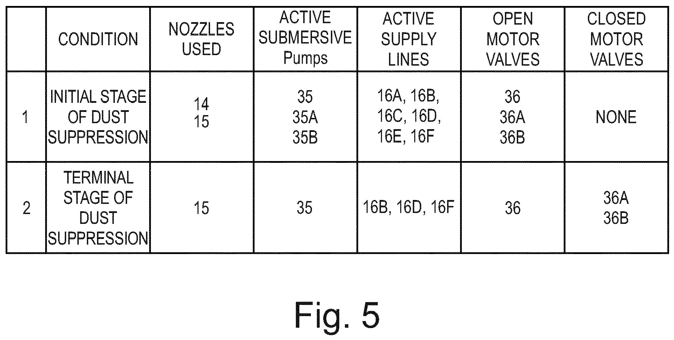

Liquid lime/calcium carbonate **(CaCO₃)** solution in tank **30** is transported to both course and fine spraying nozzles **14, 15,** by motorized valves **36,** submersible pumps **35** and check valves **38A, 38B** (see also **Fig.5**). The motorized valves **36** for nozzles **14** and **15** can be operated separately or jointly. Also, the electrical conductors for power, control and instrument data are not indicated herein as their implementation is well understood by those versed in the Art. For the distribution of liquid polymer flocculent solution to the course-spraying nozzles **14,** centrifugal pumps should not be used. Instead, progressive cavity pumps or other pumps of low-shear design should be considered.

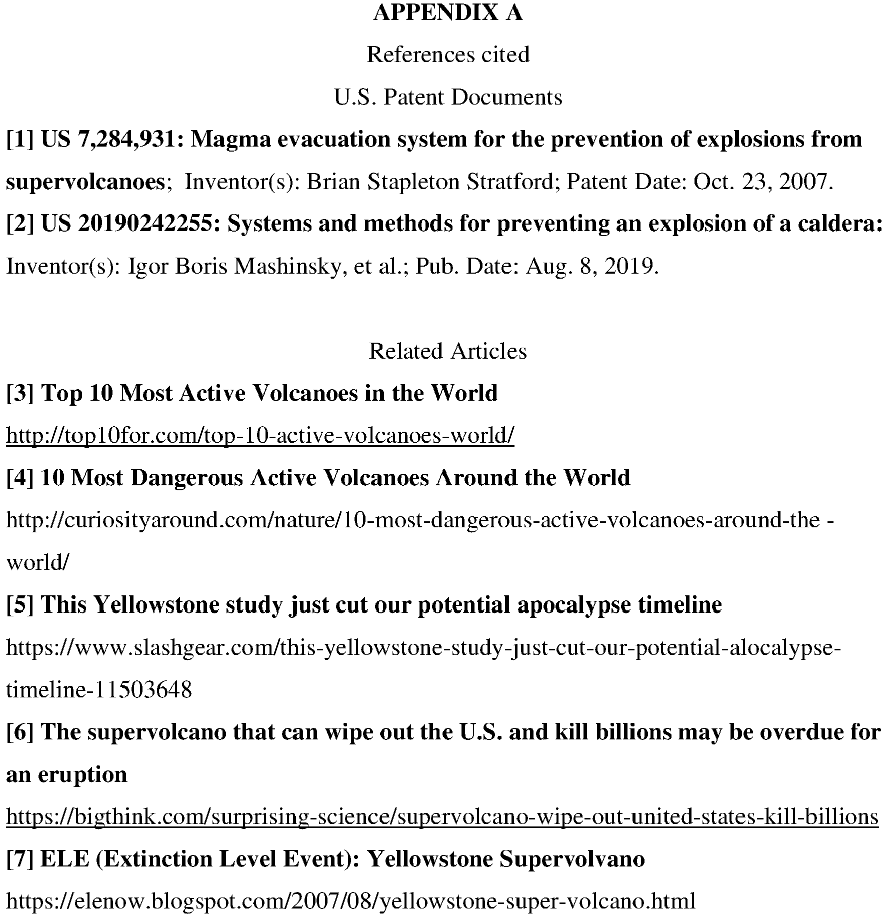

## Claims

1. A method of suppression of volcanic dust in a volcanic dust plume and accompanied corrosive vapors, the method comprising:
- upon occurrence of a volcanic eruption, flying at least one tanker airplane into a flying position above the rising dust plume, and
- spraying by the at least one tanker airplane at least one of a first fluid and a second fluid into the dust plume, the first fluid comprising a scrubbing agent that removes or neutralizes at least one corrosive vapor included in the dust plume, and the second fluid comprising a water soluble polymer flocculant.

2. The method of claim 1, **characterized in that** the scrubbing agent of the first fluid comprises at least one of sodium hydroxide, sodium bicarbonate and calcium carbonate.

3. The method of claim 1 or 2, **characterized in that** the water soluble polymer flocculant of the second fluid is based on acrylamide or polysaccharides and its derivatives.

4. The method of any of claims 1 to 3, **characterized in that** both the first fluid and the second fluid are sprayed by the tanker airplane.

5. The method of any claim 4, **characterized in that** the first fluid is sprayed through first nozzles of the tanker airplane and that the second fluid is sprayed through second nozzles of the tanker airplane.

6. The method of claim 5, wherein the first fluid is sprayed through fine spraying nozzles and the second fluid is sprayed through coarse spraying nozzles.

7. The method of any of claims 1 to 6, **characterized in that** the at least one tanker airplane is programmed to rise in a spiral fashion above the dust plume until the dust plume until stops its ascend.

8. The method of any of claims 1 to 7, **characterized in that** a plurality of tanker airplanes are used to spray the at least one fluid into the dust plume, wherein the tanker airplanes are programmed to fly in a staggered formation while maintaining similar altitude and circling in a spiral manner.

9. A tanker airplane suitable for carrying out the method of claim 1, the tanker airplane comprising:
- a fuselage (10) and two wings attached to the fuselage (10),
- at least one first tank (30) containing a first fluid, the first fluid comprising water and a scrubbing agent that is able to remove or neutralize at least one corrosive gas included in a dust plume ejected by a volcano,
- and/or at least one second tank (34A, 34B) comprising a second fluid, the second fluid comprising water and a water soluble and biodegradable polymer flocculant,
- nozzles (14, 15) attached to the underside of the fuselage (10) and/or to the bottom of at least one of the wings, the nozzles (14, 15) connected to the at least one first tank (30) and/or the at least one second tank (34A, 34B) and configured to spray the respective fluid away from the underside of the airplane.

10. The airplane of claim 9, **characterized in that** tanker airplane comprises both the at least one first tank (30) and the at least one second tank (34A, 34B), wherein first nozzles (15) are provided that are connected to the at least one first tank (30) and configured to eject the first fluid, and wherein second nozzles (14) are provided that are connected both to the at least one first tank (30) and the at least one second tank (14A, 14B) and configured to eject both the first fluid and the second fluid.

11. The airplane of claim 9 or 10, **characterized in that** the first nozzles (15) are fine nozzles and that the second nozzles (14) are coarse nozzles.

12. The airplane of any of claims 9 to 11, **characterized in that** nozzles (14, 15) are connected to the respective tank by means of flexible pipes (16A-16F) located on the underside of the fuselage or of a wing, each flexible pipe connecting a plurality of nozzles to a respective tank.

13. The airplane of claim 12, **characterized in that** each spraying nozzle (14, 15) is connected to a respective flexible pipe (16A-16F) by means of a shorter pipe (19) connected at a connector (19A) to the flexible pipe.

14. The airplane of claim 12 or 13, **characterized in that** two flexible pipes (16A, 16B) extend in axial direction along the length of the fuselage, two flexible pipes (16E, 16F) extend along the right wing and two flexible pipes (16C, 16D) extend along the left wing.

15. The airplane of any of claims 9 to 14, **characterized in that** each tank (30, 34A, 34B) comprises a mixer (32, 32A, 32B) adapted to mix the respective fluid.
